(19) **Europäisches Patentamt / European Patent Office / Office européen des brevets**

(11) **EP 3 216 616 A1**

(12) # EUROPEAN PATENT APPLICATION

(43) Date of publication:
13.09.2017  Bulletin 2017/37

(51) Int Cl.:
*B41J 11/00* (2006.01)   *G06K 15/02* (2006.01)
*H04N 1/00* (2006.01)

(21) Application number: 17159486.4

(22) Date of filing: 07.03.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 10.03.2016  EP 16159546

(71) Applicant: OCE Holding B.V.
5914 CA Venlo (NL)

(72) Inventors:
• VERHOFSTAD, Wilhelmus J.E.G
5914 CA Venlo (NL)
• KLEIN KOERKAMP, Koen J.
5914 CA Venlo (NL)
• WEIJKAMP, Clemens T.
5914 CA Venlo (NL)

(74) Representative: OCE IP Department
St. Urbanusweg 43
5914 CA Venlo (NL)

(54) ## METHOD OF PRINTING

(57) A printing method for printing an image exceeding an available size constraint of a printer comprises the steps of: providing a digital raster image comprising a plurality of pixels, the raster image comprising color and height information for each pixel; providing an algorithm for determining an optimal division of the digital image into a plurality of parts based on the information of the plurality of pixels of the raster image; image processing of the raster image comprising the step of applying the algorithm to the raster image to obtain a plurality of partial images defined by a plurality of accompanying contours; providing a substrate; printing an obtained partial image; cutting a panel from the substrate in accordance with an accompanying contour of a partial image. The present invention further relates to a printed object manufactured with the invented method and to a printer comprising a controller configured for performing the invented method.

Fig. 2

EP 3 216 616 A1

Printed by Jouve, 75001 PARIS (FR)

**Description**

FIELD OF THE INVENTION

The present invention relates to a method of printing for producing large size printed products that exceed a maximum print size of a printer or a maximum available media size.

BACKGROUND ART

Wide format printing is known in the art. For example flatbed printers of the Océ Arizona product line are configured to print large size images on a wide variety of large substrates, e.g. larger than A3.

It is also known in the art that for printing large size images exceeding the maximum print size of the printer (or the maximum available media size), the image needs to be divided in a plurality of parts that are smaller than the maximum print size of the printer. Then the plurality of parts of the image is printed as a plurality of panels (or tiles) which are assembled after printing to form a complete product. The assembling of the complete product is also termed stitching.

In patent US 4,631,596 technology has been disclosed to divide a long-size original image into a standard-size image portion, based on the occurrence of blank portions. Unfortunately, these blank portions are not always available. Also known is to set boundary lines for poster printing in accordance with a detection of principle parts, such that a boundary line does not cross a principle part, as disclosed in EP 1 650 954.

A disadvantage of the prior art is that the edges of the plurality of panels remain visible after assembly of the complete product. This effect is even more pronounced in case of 3D prints (i.e. printed products of a 3D image comprising color and height information), e.g. fine art reproductions where the printed product has additional important properties like topology (relief), gloss and transparency.

It is therefore an object of the present invention to overcome or at least mitigate said disadvantage and provide a method for producing large size printed products that exceed the maximum print size of a printer or the maximum available media size, wherein the printed product is produced as a plurality of panels and assembled (stitched) to form a complete product, and wherein the complete product has an improved appearance, in particular with respect to the visibility of the edges of the individual panels within the complete product comprising said plurality of panels.

SUMMARY OF THE INVENTION

This object can be obtained with a printing method comprising the steps of:

a) providing a digital image comprising a raster of a plurality of pixels, the digital image comprising color information for each pixel;
b) providing an algorithm for determining optimal division of the digital image into a plurality of parts based on the color information of the plurality of pixels of the digital image;
c) image processing of the digital image comprising the step of applying the algorithm to the digital image to obtain a plurality of partial images defined by a plurality of accompanying contours of the plurality of partial images;
d) providing a substrate;
e) printing a partial image obtained in step c;
f) cutting a panel from the substrate in accordance with an accompanying contour of a partial image.

The above method can also be used to facilitate transportation and reduce transportation costs and/or to reducing the risk of damaging (fragile) printed products, even if the printed product could be produced in a single step.

It is further noted that a method according to the present invention is a method for optimal *division* of the digital image, meaning that the contours of the obtained plurality of partial images run across the digital image, while methods known in the prior art provide cutting lines along the contours of the digital image.

In an embodiment, the digital image comprises height information for each pixel and the algorithm for determining optimal division of the digital image into a plurality of parts is based on height information of the plurality of pixels.

In an embodiment, the digital image may comprise further information for each pixel, for example (but not limited to) gloss information and transparency information, and the algorithm for determining optimal division of the digital image into a plurality of parts is based on said further information, in particular on gloss and/or transparency information.

In an embodiment, the image processing step c) further comprises adding an excess of pixels to the plurality of partial images, such that the plurality of partial images exceed the defined plurality of accompanying contours, wherein cutting step f is performed after printing step c to remove a part of the substrate containing the excess of pixels from the partial image printed in step c.

It is an advantage of the present embodiment, that full bleed printing is not required.

It is another advantage of the present embodiment, that the digital image itself can be used in optical alignment with high accuracy during the cutting process, optionally by providing additional cutting marks to the digital image, thereby providing high accuracy cuts. Improved alignment between adjacent partial images printed on adjacent panels can thus be obtained.

In an embodiment, the cutting is performed at an angle of between 0.2° and 3°, preferably between 0.5° and 2°, relative to the normal vector of the printed surface, such that after cutting and assembling, the panels touch one another at the top edge side, i.e. the edges of the adjacent printed partial images touch one another. Substrate visibility in the final (assembled) print product is hence further reduced.

In an embodiment, the cutting step f is performed prior to the printing step c.

The method according to the present embodiment may be preferred in case the cutting step is detrimental for the printed material or in case the printed structure is too fragile for the cutting process.

In an embodiment, the algorithm for determining optimal division of the digital image into a plurality of parts provides a cutting trajectory through areas of the digital image with high surface roughness (of the final printed product). In general surfaces having a surface roughness Ra of below 0.2 $\mu$m may have a glossy appearance. High surface roughness in the context of the present invention may therefore be construed as a surface having a Ra of above 0.2 $\mu$m, in particular Ra >> 0.2 $\mu$m.

It is an advantage of the present embodiment, that glossy areas (i.e. smooth areas having a low surface roughness.) in the image are avoided in the cutting step, such that the transition between two adjacent panels is less visible.

In an embodiment, the algorithm for determining optimal division of the digital image into a plurality of parts provides a cutting trajectory through areas of the digital image with dark colors.

In the experience of the inventions, the dark colored areas show less pronounced transitions between the partial images. However, other factors such as the used cutting technique, substrate material and printing material may be of influence in determining the preferred color range for cutting.

In an embodiment, the algorithm for determining optimal division of the digital image into a plurality of parts comprises a step of avoiding the cutting trajectory to go through critical 3D shapes (such as overhanging parts or particularly known fragile (micro) structures).

In an embodiment, the algorithm for determining optimal division of the digital image into a plurality of parts comprises a step of smoothening the obtained trajectory in order to avoid sharp direction transitions in the trajectory.

In an embodiment, the algorithm for determining optimal division of the digital image into a plurality of parts comprises a step of taking into account requirements and/or restrictions of the used cutting technology. For example selection of criteria based on cutting technology induced artifacts or capabilities of the cutting technology, e.g. critical curvature of the cutting trajectory above which the risk of damage significantly increases.

The substrate is not particularly limited to any kind. However, in an embodiment, the substrate is selected from the group consisting of vinyl, paper, PVC, PET, dibond, textile, foam, cardboard, wood, ceramics and metals.

In an embodiment, the algorithm for determining optimal division of the digital image into a plurality of parts provides contours of the plurality of partial images, wherein the contours of the plurality of partial images are determined with a constraint that the obtained plurality of panels can be assembled to form a mechanically stable printed product. For example a preferential form of the cutting trajectory may be introduced, e.g. a puzzle like structure.

In an embodiment, a 3D-image is adapted at the location of the determined cutting trajectory to reduce the visibility of the transversal area after cutting. For example the printed layers building the height of the image at the location of the cutting trajectory can be printed in the same color, in particular the same color as the top layer of the digital image at that location.

In another aspect, the present invention relates to a printed object, obtained with a method according to the present invention.

In an embodiment, the printed object is fine art reproduction.

In an embodiment, the printed object comprises a plurality of parts that are assembled after production of the plurality of parts to form the printed object.

In yet another aspect the present invention relates to a printer comprising a controller configured for performing a method according to the present invention.

In an embodiment, the controller comprises an algorithm for determining optimal division of the digital image into a plurality of parts based on the color information of the plurality of pixels of the digital image.

In an embodiment, the controller comprises an algorithm for determining optimal division of the digital image into a plurality of parts based on the height information of the plurality of pixels of the digital image.

In an embodiment, the digital image may comprise further information for each pixel, for example (but not limited to) gloss information and transparency information, the controller comprises an algorithm for determining optimal division of the digital image into a plurality of parts based on said further information, in particular on gloss and/or transparency information.

In an embodiment, the controller comprises an algorithm for determining optimal division of the digital image into a plurality of parts based on critical feature information of the digital image.

In an embodiment, the controller comprises a user interface for entering input data based on which the algorithm generates a trajectory for optimal division of the digital image.

In a further embodiment, the input data comprise at least one selected from the group consisting of: requirements and/or restrictions of the cutting technology; substrate type; ink type; maximum size of division parts of the product; number of division parts of the product; and user defined critical features in the digital image.

BRIEF DESCRIPTION OF THE DRAWINGS

The present invention will become more fully understood from the detailed description given herein below and accompanying schematical drawings which are given by way of illustration only and are not limitative of the invention, and wherein:

Fig. 1 shows a schematical representation of a cutting trajectory generation method according to the present invention.

Fig. 2 shows a photograph of a part of a fine art reproduction.

DETAILED DESCRIPTION

The presented invention relates to a method that aims at producing a cutting trajectory design that preserves critical features (optionally user defined) of printed matter, in particular relief printed matter. The cutting trajectory is formed by a set of points characterized by their coordinates in the digital (relief) image.
The cutting trajectory is then submitted to a cutting machine (e.g. CNC-cutter-milling machine; laser-beam cutter; water-beam cutter, etc) to produce a plurality of substrates (e.g. panels, tiles) comprising a corresponding plurality of parts of the digital (relief) image. The plurality of parts of the digital image can be printed prior or after cutting the substrate into the plurality of substrates. Afterwards, the plurality of substrates can be packaged, shipped and reassembled to form the complete (relief) printed product, e.g. a fine art reproduction.

The cutting trajectory used in a method according to the present invention is generated based on specific features such as (but not limited to) color, height, gloss and translucency of a digital image to be printed and in accordance with a method (from now on termed "cutting trajectory generation") described below.
Trajectory generation starts with defining a cutting trajectory search area within the digital image to be printed. This area defines a region where the image or the (printed) substrate can be divided into two parts, based on the size of the print and the maximum size of the printing area and/or the available maximum substrate size.
The cutting trajectory is enclosed by the search area and crosses this search area (e.g. having a rectangular shape) in a first direction, for example a vertical direction (e.g. from the top to the bottom of the search area). The same procedure can be performed in a second direction substantially perpendicular to the first direction (e.g. from left to right), to produce tiles that can be easily handled.

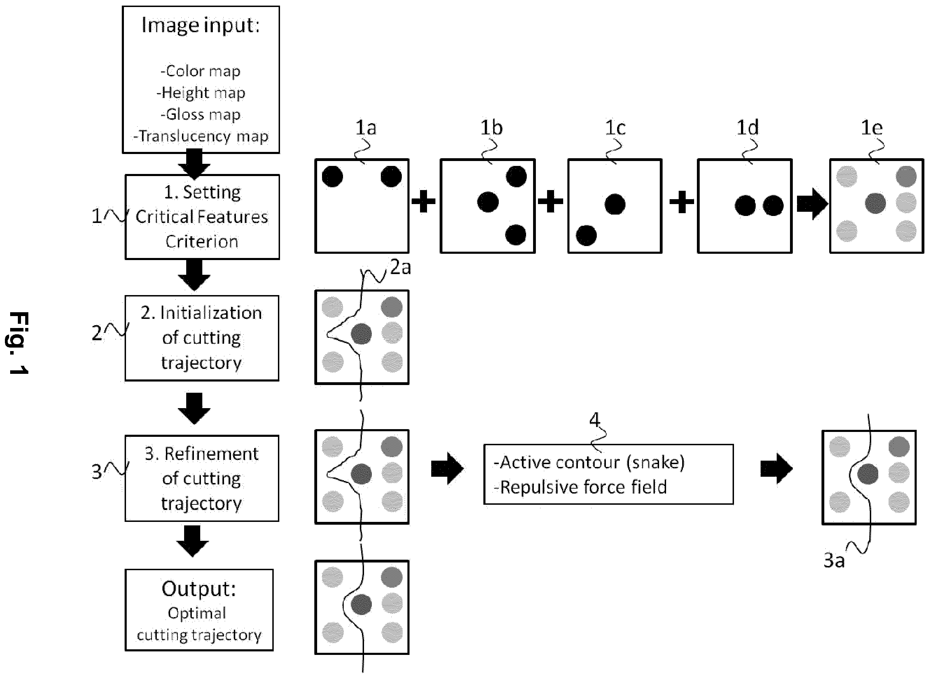

The cutting trajectory generation of the present example comprises three main steps, which will be further described in the sections below (numbering of the steps corresponds to the numbering in Fig. 1:

1. Critical feature criterion setting (manual or (semi-)automatic);
2. Cutting trajectory initialization;
3. Cutting trajectory refinement.

Besides the digital image input (shown in Fig. 1), other input elements may be (but not limited to) cutter capabilities, substrate and marking material characteristics (not shown).

**Step 1 : Setting the critical feature criterion**

The cutting trajectory generation starts with specifying a criterion which describes the areas of the digital image or the printed substrate that the cutting trajectory path should preferably not cross: the critical feature criterion. The critical feature criterion is based on knowledge of the risk of damaging the printed matter during cutting and prevents that the cutting trajectory runs through areas of the digital image or the printed substrate with a high risk of being damaged during cutting. This criterion may be dependent on image information, but also on the used cutting technique and/or used print substrates and/or used print materials. The criterion may be (partially) user defined, and may be (partially) automatically determined or a combination of both.
The digital image may comprise color and/or height (relief) and/or gloss and/or translucency information. Based on the print input, the user may specify critical features that must be preserved and hence preferably avoided by the cutting process. For example:

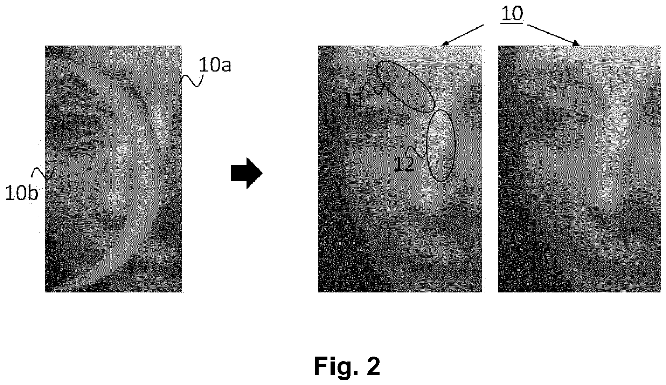

- Highly elevated areas may be selected to be avoided by the cutting trajectory to limit the transversal surface of the interfaces of two adjacent substrates that are joined when the complete product is assembled.
- If the cutting technology introduces a dark line artifact (e.g. laser), dark regions in the digital image may be selected to be preferred regions to be crossed by the cutting trajectory, for minimizing visibility of the dark line artifact after cutting, in particular after assembling the complete print product. On the other hand, if the cutting technology introduces cutting contours with substrate color (e.g. white coating), light regions in the digital image may be selected to be preferred regions to be crossed by the cutting trajectory, for minimizing visibility of the contours having substrate color, in particular after assembling the complete print product. Figure 2 shows a part of a fine art reproduction 10 comprising a face. The part has been cut into two pieces 10a, and 10b respectively and reassembled. It can be seen that in the dark colored area 11 (eyebrows) the cut can hardly be seen, while in lighter areas, such as area 12 (nose) the cut is clearly visible. For this particular example cutting through dark areas would be preferable. Similar analysis can be made for other features, such as gloss.
- In case of elevated text, the letters may be selected as critical features to be preferably avoided in the cutting process.
- Regions comprising sharp edges due to high gradients in height (elevation) may be considered to be noticeable transitions in a print that may be selected as critical features to be preferably avoided in the cutting process.
- High gloss regions may be selected as critical features to be preferably avoided in the cutting process.

In the cutting trajectory generation used in a method according the present invention, the critical features criterion may be represented as a grey level image (critical features map), wherein the grey level indicates the importance of regions in the digital image containing critical features and the differences in grey levels in the critical features map indicates the relative importance critical features in the digital image. For example, regions containing highly critical features are considered to be highly important regions to avoid in the cutting process and such regions are indicated with high grey value (black). The other way around is also a possibility. This is a matter of convention.

Referring to the above examples, the critical features criterion may be determined by using the following features of the digital image:

- a height map 1a of the digital image to be printed, which is a first partial digital image comprising the raster of the plurality of pixels of the digital image to be printed, the first partial digital image comprising height information for each pixel, in accordance with the corresponding pixel in the digital image to be printed. In the schematical representation shown in Fig. 1, the black dots in the height map 1a indicate highly elevated regions in the image. In practice the height map may comprise a gradient of grey levels for indicating height gradients;
- a color map 1 b of the digital image to be printed, which is a second partial digital image comprising the raster of the plurality of pixels of the digital image to be printed, the second partial digital image comprising color information (e.g. hue and lightness values), for each pixel, in accordance with the corresponding pixel in the digital image to be printed. In the schematical representation shown in Fig. 1, the black dots in the color map 1b indicate colored regions that must be avoided in the cutting process. Depending on a.o. the cutting technique the dots in the color map 1 b may indicate light regions or dark regions, whichever regions need to be avoided in the cutting process. In practice the color map may comprise a gradient of grey levels for indicating lightness gradients;
- a text map of the digital image to be printed, which is a third partial digital image comprising the raster of the plurality of pixels of the digital image to be printed, the third partial digital image comprises text items. The text items may be identified by using Optical Character Recognition (OCR) or any other specific pattern recognition method;
- height map gradients, e.g. derived from the height map and defining sharp edges in the image (i.e. large height gradient).
- high frequent noise map derived from the height map, or an actual determined gloss map 1 c in Fig. 1. Gloss correlates well with the surface roughness, i.e. high frequent noise in the height information of the digital image. In the schematical representation shown in Fig. 1, the black dots in the gloss map 1c indicate regions of high gloss that must be avoided in the cutting process. In practice the gloss map may comprise a gradient of grey levels for indicating gloss gradients.

Additionally, the cutting trajectory generation may comprise detection (automatic or manually) of isolated features having a critical shape, for example:

- fragile shapes, such as isolated features having a high aspect ratio (in the context of the present invention to be interpreted as structures having a small print area and a large height). Such structures may also be detected by determining the height map gradients (see above). Cutting trajectories running through areas containing such structures are preferably prevented;

- non-cuttable shapes, such as overhanging shapes. In particular in fine art reproductions, the printed product may comprise structures resembling brushstrokes. Such structures will be damaged when cut and must therefore be avoided by the cutting trajectory;
- the shape of isolated features (e.g. text) may be concave (like the letters E or C for example). This concavity may lead to generation of cutting trajectories with high curvature (sharp direction transitions). To avoid this, a convex hull algorithm may be used, such that concave structures are circumvented by the cutting trajectory.

A map indicating the location of isolated features having a critical shape, 1d in Fig.1, may be manually or semi-automatically determined.

Individual criteria as discussed above may be dependent on the capabilities of the used cutting technology (e.g. mechanical cutting, laser-beam cutting, water-beam cutting, etc), used ink material and substrates.

Note that the presence of multiple features (for example, high elevated area and region with bright colors) may lead to multiple criteria for cutting trajectory generation. Those criteria may however be contradicting one another. For example, low elevated regions may be printed with high lightness. As low elevated regions might be chosen to be preferred for the cutting trajectory, the cut line may then also cross bright region.

In order to solve the above, a global criterion (i.e. an image map pixel wise indicating the desirability to avoid said pixel in a cutting trajectory, e.g. 0 = OK to cut; 1 = not OK to cut) may be defined taking into account multiple criteria (e.g. color map, height map, height map gradients, gloss map, etc) for generating a cutting trajectory. The global criterion may be expressed as a linear combination of multiple image criteria, taking into account the relative importance of a single image criterion by weight factors as expressed in equation 1. The image criteria are first normalized and then weighted:

$$GC = \sum_{i=1}^{n} W_i * IC_i \qquad\qquad (1)$$

wherein:

GC represents the global criterion;
$IC_i$ represents a normalized image criterion i (there are n criteria);
$W_i$ is the applied weight factor for $IC_i$, wherein $\sum_{i=1}^{n} W_i = 1$

The global criterion shown in Fig. 1, indicated with 1e, is composed by adding the height map, the color map, the gloss map and the isolated features with critical shape map with all weight factors being 0.25. The grey-level of the dots in the global criterion map 1e indicates the importance of avoidance of a certain area in the cutting process.

**Step 2 - Cutting trajectory initialization**

In the present example, two ways to start a cutting trajectory generation are discussed: user defined and (semi-)automatic.

<u>User defined cutting trajectory initialization:</u>

In this approach, the user manually draws a cutting trajectory by approximately indicating one or more regions where the cutting trajectory should be located. At this stage high precision (which would be time consuming and prone to errors) is not required because in a next step of the cutting trajectory generation, refinement of the initially indicated cutting trajectory will be performed.

<u>Automatic cutting trajectory generation:</u>

In this approach, based on one or more image criteria and/or the global criterion as discussed above an algorithm such as a minimum cost path search algorithm like the Dijkstra method may be used to determine an initial cutting trajectory. Such mathematical methods are known in the art and therefore not further discussed here.

As can be seen in Figure 1, a global criterion 1e based on a critical feature preservation map allowed to automatically select an initial cutting trajectory 2a that preserves the region with high lightness, high elevation, and high gloss and containing isolated features with critical shape. Criteria such as edges related to strong elevation differences (height map gradients) and other criteria disclosed above (but not limited to those), may also be used in defining a global criterion.

However, the initial cutting trajectory 2a may show abrupt and/or sharp direction changes, oscillations and may be too close from edges of critical features. That is the reason why, a refinement stage is proposed as Step 3.

Step 3 - Cutting trajectory refinement:

Given an initial cutting trajectory, $C_0$ 2a in Fig 1, obtained in step 2, the refinement step consists in producing a cutting trajectory, C that crosses the search area under the following two constraints:

- the critical features are avoided as much as possible along the cutting trajectory C.
- the cutting trajectory C is smooth and regular.

Cutting trajectory refinement may be inspired by methods and/or algorithms known in the prior art, for example the so called active contour method (also called snake method or algorithm, see 4 in Fig. 1). This class of algorithms is used for detecting the boundaries of shapes in an image. Despite the fact that a cutting trajectory according to the present invention may also be an open curve instead of a closed contour of an object shape in an image, an active curve method may be used to compute an open curve as cutting trajectory.

The cutting trajectory iteratively converges towards a local minimum of an energy function, E, represented in equation 2:

$$E = E_{curv} + E_{stif} + E_{crit} \qquad\qquad (2)$$

wherein:

- $E_{curv}$ controls the curvature of C and is based on the first derivative of C;
- $E_{stif}$ controls the stiffness of C and is based on the second derivative of C;
- $E_{crit}$ represents a critical features criterion;
- E is then expressed as a partial differential equation.

The partial differential equation can be minimized using approaches known from prior art. The coordinates of the starting point and end point of the cutting trajectory are the boundary conditions for solving the partial differential equation. Minimizing E ensures that the cutting trajectory C satisfies the two previously mentioned constraints, i.e. it is smooth and it crosses the search area at points where the critical features criterion is used as a guide towards the desired solution.

The minimization of $E_{crit}$ may involve the generation of a force field (based on a criterion map, e.g. the global criterion map, see 4 in Fig. 1) that will guide the cutting trajectory to areas where the criterion is low, i.e. where cutting is least critical.

According to a method of the present invention a repulsive force field that is derived from the critical feature criterion (e.g. global criterion) may be computed. Basically a gradient in grey level of a pixel in the critical feature criterion with respect to its surrounding pixels is calculated and expressed as a single force vector of the pixel. The force field may be designed to provide the desired properties to the final curve. For example, the user may want the curve to be as far as possible from the critical features. So a repulsive force vector flow centered on each feature can be built. As general principle the force field will guide the cutting trajectory through the search region where the force field is neutral, e.g. force is zero or force cancellation (force vectors of adjacent pixels at least partially cancel one another).The evolution of the cutting trajectory will be implemented by a snake algorithm parameterized by the, so determined, repulsive force field.

Repulsive force fields regarding critical features can be determined based on several criteria and also based on a combination of criteria. For example:

- repulsive force field from the Critical Feature map (see above). Mathematical methods to determine such force field are known in the prior art and not further discussed.

  ○ repulsive force field from a convex hull approach of concave critical features comprising the steps of: computing the barycentre of the convex hull of the critical features to be preserved;
  ○ computing a vector formed by the difference between the coordinates (x,y) of a pixel and the coordinates of the barycentre $(x_b, y_b)$, for each pixel inside the convex hull region;
  ○ normalizing the obtained vector field;

◦ Diffusing the vector field from the inside of the convex hull towards the outside to keep active force vectors present at a predetermined distance from the edges of the convex hull.

Mathematical methods for performing the steps described above are known in the art and not further discussed.

This method is particularly suitable for cutting trajectory generation in cases wherein (but not limited to):

- features represented by vectors (letters, drawings, shapes, etc.) are present in the image which features can be rasterized into a binary image in a straight forward way to produce a critical feature criterion and associated convex hull; and

- a manual cutting trajectory initialization (step 2) is performed, wherein the initial cutting trajectory is roughly drawn and crosses the features to be preserved

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one.

The invention being thus described, it will be obvious that the same may be varied in many ways. Such variations are not to be regarded as a departure from the scope of the invention, and all such modifications as would be obvious to one skilled in the art are intended to be included within the scope of the following claims.

**Claims**

1. A method for printing an image exceeding an available size constraint of a printer, the method comprising the steps of:

   a) providing a digital raster image comprising a plurality of pixels, the raster image comprising color and height information for each pixel;
   b) providing an algorithm for determining an optimal division of the raster image into a plurality of parts based on the information of the plurality of pixels;
   c) image processing of the raster image comprising the step of applying the algorithm to the raster image to obtain a plurality of partial images defined by a plurality of accompanying contours of the plurality of partial images;
   d) providing a substrate;
   e) printing on the substrate a partial image obtained in step c;
   f) cutting a panel from the substrate in accordance with an accompanying contour of the partial image.

2. The method according to claim 1, wherein the image processing in step c comprises adding an excess of pixels to the plurality of partial images, such that the plurality of partial images exceed the defined plurality of accompanying contours, wherein cutting step f is performed after printing step c to remove a part of the substrate containing the excess of pixels from the partial image printed in step c.

3. The method according to claim 1, wherein the cutting step f is performed prior to the printing step c.

4. The method according to any of the preceding claims, wherein the algorithm for determining an optimal division of the raster image into a plurality of parts provides a contour through areas of the raster image with high surface roughness.

5. The method according to any of the preceding claims, wherein the algorithm for determining an optimal division of the raster image into a plurality of parts provides a contour through areas of the raster image with dark colors.

6. The method according to any of the preceding claims, wherein the algorithm for determining an optimal division of the raster image into a plurality of parts comprises a step of avoiding the contour to go through predetermined critical 3D shapes.

7. The method according to any of the preceding claims, wherein the algorithm for determining an optimal division of the raster image into a plurality of parts comprises a step of smoothening a contour direction in order to avoid sharp direction transitions in the contour.

8. The method according to any of the preceding claims, wherein the algorithm for determining an optimal division of the raster image into a plurality of parts comprises a step of taking into account requirements of the used cutting technology.

9. A printed object that exceeds an available size constraint of a printer, the object comprising a plurality of parts that are obtained with a method according to any of the preceding claims, the plurality of parts being assembled after production of the individual parts to form the printed object.

10. A printer comprising a controller configured for performing a method according to any one of the claims 1 to 8.

11. The printer according to claim 10, wherein the controller comprises an algorithm for determining an optimal division of the raster image into a plurality of parts based on the height information of the plurality of pixels of the raster image.

12. The printer according to claim 10 or 11, wherein the controller comprises an algorithm for determining an optimal division of the raster image into a plurality of parts based on the color information of the plurality of pixels of the raster image.

13. The printer according to any one of the claims 10 to 12, wherein the controller comprises an algorithm for determining an optimal division of the raster image into a plurality of parts based on critical feature information of the raster image.

14. The printer according to any one of the claims 10 to 13, wherein the controller comprises a user interface for entering input data based on which the algorithm generates a contour for optimal division of the digital image.

Fig. 1

**Fig. 2**

Europäisches
Patentamt

European
Patent Office

Office européen
des brevets

# EUROPEAN SEARCH REPORT

Application Number

EP 17 15 9486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 631 596 A (YAGUCHI TATSUYA [JP]) 23 December 1986 (1986-12-23) * column 1, line 38 - line 47 * * column 2, line 41 - column 4, line 64 * * figures 4A, 4B, 4C * ----- | 1-8, 10-14 | INV. B41J11/00 G06K15/02 H04N1/00 |
| A | EP 1 650 954 A1 (NORITSU KOKI CO LTD [JP]) 26 April 2006 (2006-04-26) * paragraph [0005] - paragraph [0009] * * paragraph [0046] - paragraph [0078] * * figures 3A, 3B * ----- | 1-8, 10-14 | |
| A | EP 0 971 532 A2 (CANON KK [JP]) 12 January 2000 (2000-01-12) * paragraph [0057] - paragraph [0090] * ----- | 1-8, 10-14 | |
| A | US 2003/044200 A1 (CONNORS THOMAS W [US]) 6 March 2003 (2003-03-06) * paragraph [0034] - paragraph [0073] * ----- | 1-8, 10-14 | |

TECHNICAL FIELDS
SEARCHED (IPC)

B41J
G06K
H04N

The present search report has been drawn up for all claims

| Place of search | Date of completion of the search | Examiner |
|---|---|---|
| Munich | 30 June 2017 | Geiger, Hans-Walter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 216 616 A1**

## ANNEX TO THE EUROPEAN SEARCH REPORT
## ON EUROPEAN PATENT APPLICATION NO.

EP 17 15 9486

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2017

| Patent document cited in search report | | Publication date | Patent family member(s) | | Publication date |
|---|---|---|---|---|---|
| US 4631596 | A | 23-12-1986 | JP<br>US | S60178774 A<br>4631596 A | 12-09-1985<br>23-12-1986 |
| EP 1650954 | A1 | 26-04-2006 | CN<br>EP<br>JP<br>US | 1764230 A<br>1650954 A1<br>2006121371 A<br>2006087700 A1 | 26-04-2006<br>26-04-2006<br>11-05-2006<br>27-04-2006 |
| EP 0971532 | A2 | 12-01-2000 | DE<br>EP<br>EP<br>EP<br>JP<br>JP<br>US<br>US<br>US | 69935552 T2<br>0971532 A2<br>1744538 A2<br>2317753 A1<br>3392057 B2<br>2000025277 A<br>6507411 B1<br>2003053083 A1<br>2005052662 A1 | 06-12-2007<br>12-01-2000<br>17-01-2007<br>04-05-2011<br>31-03-2003<br>25-01-2000<br>14-01-2003<br>20-03-2003<br>10-03-2005 |
| US 2003044200 | A1 | 06-03-2003 | NONE | | |

EPO FORM P0459

For more details about this annex : see Official Journal of the European Patent Office, No. 12/82

**EP 3 216 616 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4631596 A
- EP 1650954 A